# EUROPEAN PATENT SPECIFICATION

(11) **EP 3 771 790 B1**
(45) Date of publication and mention of the grant of the patent: **02.02.2022**
(21) Application number: 20187935.0
(22) Date of filing: 27.07.2020
(51) Int. Cl.: E05B 81/16, E05B 83/36, E05B 83/44

(54) **LOCK**
SCHLOSS
VERROU

(30) Priority: 02.08.2019 IT 201900013797
(43) Date of publication of application: 03.02.2021
(73) Proprietor: LCI ITALY S.R.L., 50026 San Casciano Val di Pesa (FI) (IT)
(72) Inventor: AMATO, Giuseppe, 53100 Siena (IT)
(74) Representative: Firmati, Leonardo

(56) References cited:
- DE-A1- 19 758 078
- DE-A1-102016 010 672
- DE-A1-102018 100 301
- DE-U1-202011 101 607

## Description

This invention relates to a lock.

More specifically, this invention is widely used in the technical field of locks for caravans and campervans.

In accordance with the prior art, a plurality of different types of locks are available on the market, specially developed to allow the closing of the doors of caravans and campervans.

Disadvantageously, these locks comprise a large number of components the motion of which must be meticulously calibrated so as to guarantee a correct closing or opening of the door.

Moreover, these components are commonly made of different types of material which, having different thermal expansion coefficients, modify the relative dimensions, changing the relative clearances and, with them, the kinematic chain of the entire lock.

More specifically, the dimensional variations induced by the thermal excursions cause the onset of forces on the lock which can determine the failure.

Although these variations can be partly overcome by recurrent adjustment of the clearances of the lock in order to protect the essential functions of the lock, these adjustments are often not very effective and tend to reduce the functionality of the lock.

Disadvantageously, moreover, the vibrational stresses induced by the movement through the locking elements, for example the latches, on the lock blocking mechanism determines a reduction in the operating life.

Examples of prior art type locks are described in the following patent documents: DE102018100301A1, DE102016010672A1, DE202011101607U1 and DE19758078A1.

The technical purpose of the invention is therefore to provide a lock which is able to overcome the drawbacks of the prior art.

The aim of the invention is therefore to provide a lock which is particularly efficient and which has an increased duration of the operating life compared with the prior art devices.

The technical purpose indicated and the aim specified are achieved by a lock with the technical features described in claim 1. Further advantageous embodiments are described in the dependent claims.

Further features and advantages of this invention are more apparent in the non-limiting description below, with reference to a preferred, non-limiting, embodiment of a lock as illustrated in the accompanying drawings, in which:
- Figure 1 is a perspective view of a lock according to the invention;

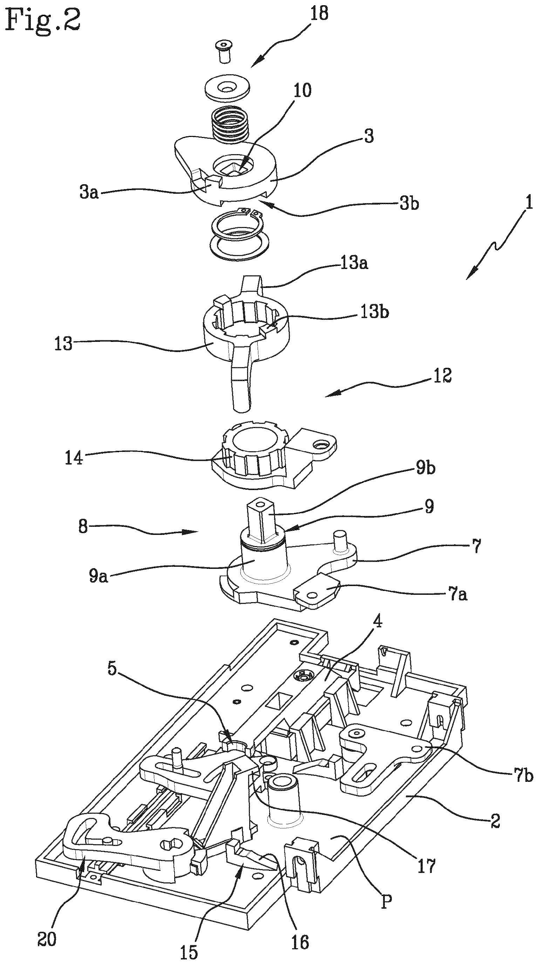

- Figure 2 is an exploded view of a lock according to a possible embodiment of the invention;

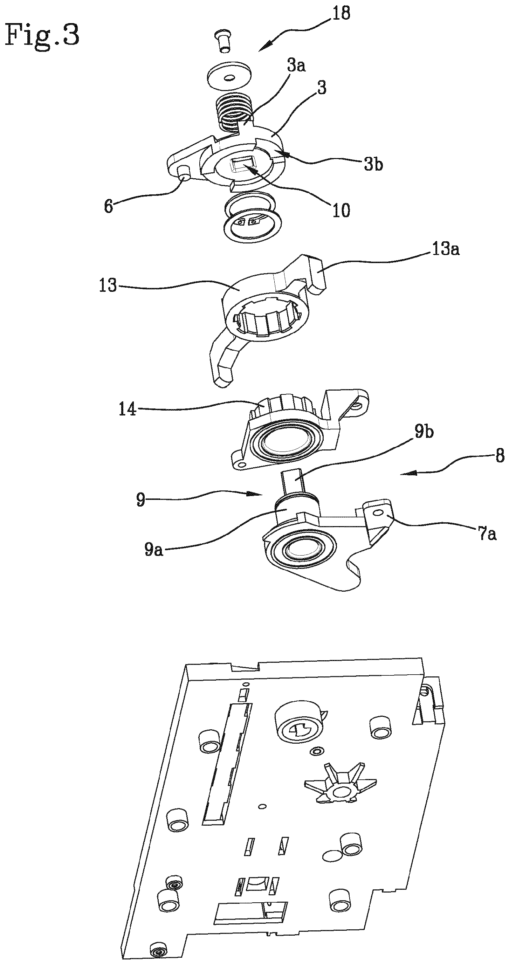

- Figure 3 is a further exploded view of the lock according to a possible embodiment of the invention;

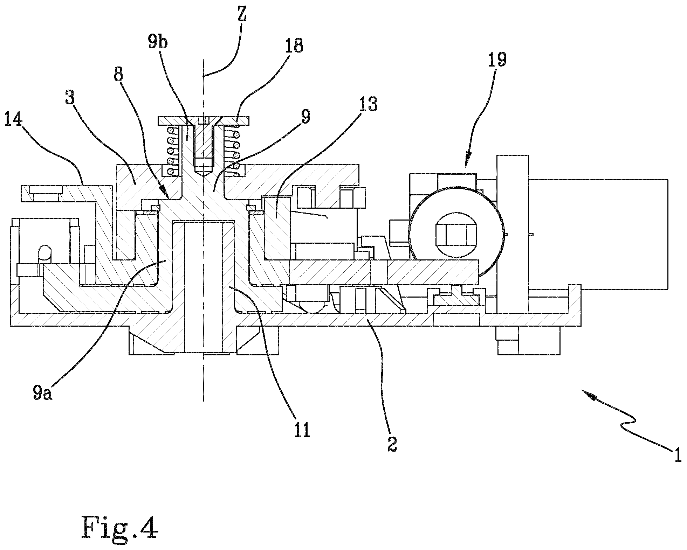

- Figure 4 is a cross section view of the lock according to the invention according to a possible operating condition;
- Figure 5 is a cross section view of the lock according to the invention according to a further possible operating condition;

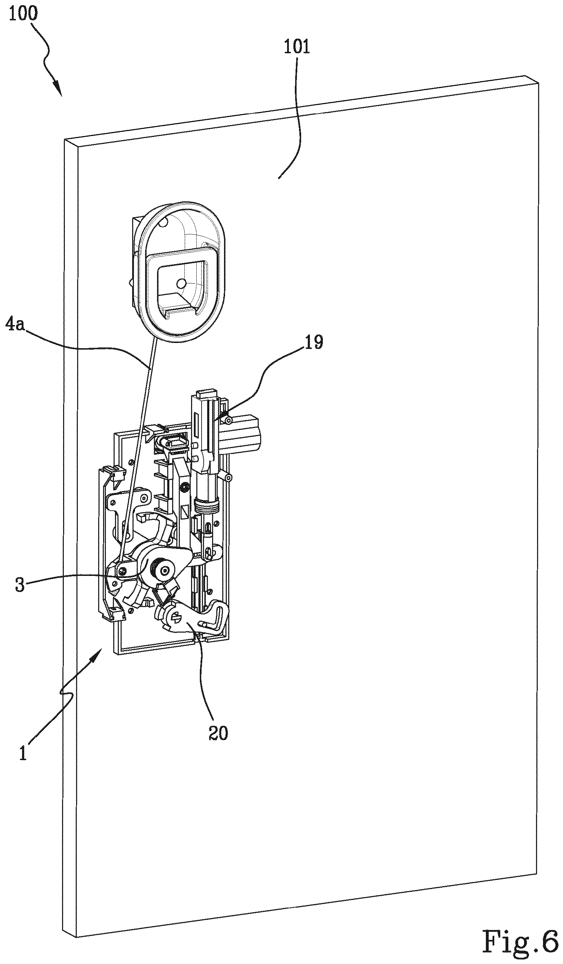

- Figure 6 is a perspective view of a closing device according to a further aspect of the invention;

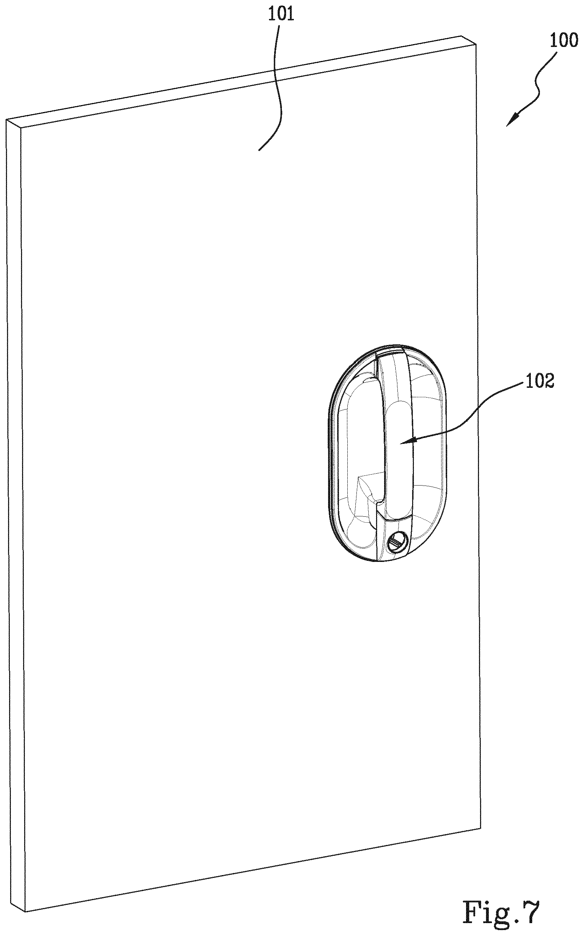

- Figure 7 is a further perspective view of the closing device of Figure 6.

With reference to the accompanying drawings, the numeral 1 denotes in its entirety a lock.

Advantageously, the lock 1 is connectable to a closing panel, for example a sash, a window or a door, in such a way as to allow a reversible passage between an open condition and a closed condition and vice versa.

More specifically, the lock 1 may find large possibilities of application in the technical field of caravans and/or campervans.

The lock 1 comprises a supporting base 2 defining a main lying plane "P".

Advantageously, the supporting base 2 may be coupled to a cover in such a way as to define a containment space "V" for the components of the lock which will be subsequently specified.

Preferably, the supporting base 2 and/or the above-mentioned cover may be made of plastic material.

The lock also comprises a control element 3 configured to allow a reversible passage of the panel from an open condition to a closed condition and vice versa. More specifically, the term "closed condition" of the panel means a condition wherein the panel is coupled to a respective frame and prevents the passage of a user.

Vice versa, the term "open condition" means a condition wherein the panel is uncoupled from the frame allowing the passage of a user.

The control element 3 is connected to the supporting base 2 and is rotatable relative to it about an axis of rotation "Z".

The axis of rotation "Z" is transversal, preferably perpendicular, to the plane "P". Moreover, the control element 3 is connected or connectable to a control handle which can be operated by a user.

The expression "connected or connectable" means that the control element 3 is designed to be connected to a control handle which can be operated by a user. More specifically, the control element 3 is rotatable between a first position corresponding to an open condition of the panel and a second position corresponding to a closed condition of the panel.

According to the invention the lock 1 comprises a movable element 4 designed to connect the control handle to the control element 3.

In this way, the movable element 4 makes it possible to transmit to the control element 3 the actuation imparted by the user to the handle.

Preferably, the movable element 4 is movable in a sliding or translation fashion between a first position corresponding to an open condition of the handle and a second position corresponding to a closed condition of the handle.

According to the invention the movable element 4 may be coupled to the control element in such a way that a movement of the movable element 4 causes a rotation of the control element 3 about the axis of rotation "Z".

Preferably, the movable element 4 and the control element 3 have, respectively, a fork-shaped portion 5 and a coupling pin 6 defining a kinematic coupling.

In accordance with a possible embodiment of the invention, the movable element 4 is defined by a rod or slider equipped with translational movement and coupled to the control element 3 in an eccentric portion relative to the axis Z by means of the coupling pin 6 positioned inside the respective fork-shaped portion 5.

In other words, the movable element 4 is configured for making contact on the coupling pin 6 by means of the fork-shaped portion 5 for imparting a rotation to the control element 3.

In the closed condition of the panel, the actuation of the handle causes the movement of the movable element 4 from the second position towards the first position which causes the fork-shaped portion 5 to push the coupling pin 6 promoting the passage of the panel to an open condition.

After the movement of the coupling pin 6, the movable element 4 translates until reaching the second position by disengaging the kinematic coupling between the coupling pin 6 and the movable element 4.

Preferably, there are elastic return means acting on the movable element 4 which determine a return from the first position to the second position.

The movement of the panel from an open condition to a closed condition, for example by a user who moves the panel until coupling it again to the frame, determines the movement of the control element 3 towards the second position engaging again the kinematic coupling between the coupling pin 6 and the movable element 4.

In other words, the movement of the control element 3 towards the second position returns the coupling pin 6 to the seat formed by the fork-shaped portion 5.

Moreover, the control element 3 may be disengaged from the movable element 4 by moving the coupling pin 6 from the respective fork-shaped portion 5 with axial movement along the axis "Z".

Advantageously, the lock 1 may comprise a further movable element "4a" designed to connect a further control handle to the control element 3. In this way, the lock 1 may have two different opening methods, for example used respectively for an opening from the inside and an opening from the outside of a caravan. According to a possible embodiment, the control handle and the movable element 4 are operatively connected for acting on the closing panel from the outside of a room, for example the cabin of a caravan, and the further control handle and the further movable element 4a are operatively connected for acting on the closing panel from the inside of the room.

The control element 3 is also rotationally coupled to an operating element 7.

More specifically, the lock 1 comprises an operating element 7 mounted on the supporting base 2 in a rotatable fashion, preferably, about the axis of rotation "Z" and connected or connectable to means for releasing the above-mentioned closing panel.

The expression "connected or connectable" means that the operating element 7 is designed to be connected to means for releasing the above-mentioned closing panel.

Moreover, the operating element 7 can rotate between a first position corresponding to an open condition of the panel and a second position corresponding to a closed condition of the panel.

According to a possible embodiment and as illustrated in the accompanying drawings, the operating element 7 may comprise a first and a second counterrotating operating body "7a", "7b" connected to respective release means, for example a Bowden cable connected to the latch of the panel.

According to further embodiments not illustrated in the accompanying drawings, the operating element 7 may comprise a different number of operating bodies and/or the release means may be of a different type to that previously indicated without altering the inventive concept which forms the basis of the invention. The lock 1 also comprises a mechanical transmission 8 acting between the movable element 4 and the operating element 7.

In other words, the mechanical transmission 8, and in particular the control element 3, is designed to kinematically connect together the movable element 4 and the operating element 7 in such a way that a movement of the movable element 4 causes a rotation of the operating element 7 about the axis of rotation "Z".

Advantageously, the control element 3 and the operating element 7 can be coupled by means of a shape coupling contributing to limiting the number of components of the lock 1.

More specifically, the mechanical transmission 8 comprises a pin 9 designed to define the above-mentioned shape coupling.

The pin 9 is mounted on the supporting base 2 rotatably about the axis of rotation "Z".

According to the invention the coupling between the pin 9 and at least one between the control element 3 and the operating element 7 is made by means of a grooved connection along the axis of rotation "Z".

According to a possible embodiment and as illustrated in the accompanying drawings, the pin 9 is connected to the control element 3 by a grooved connection. More specifically, the control element 3 may be permanently connected in a rotational fashion, in a relative axial sliding, with the pin 9 by means of the above-mentioned grooved connection.

Preferably, the pin 9 is designed to engage in a seat 10 of the control element 3 for coupling the control element 3 and the operating element 7.

Moreover, the pin 9 may be rotationally integral in a permanent fashion with the operating element 7.

More specifically, the pin 9 may be made integrally in one piece with the operating element 7.

Advantageously, the pin 9 may have a hollow shape and the supporting base 2 may comprise a tubular body 11 having a direction of extension parallel to the axis of rotation "Z".

According to this embodiment, the pin 9 is designed to be fitted on the tubular body 11 and the tubular body 11 is designed to rotatably support the pin 9 during the movement.

According to a further embodiment not illustrated in the accompanying drawings, the operating element 7 may have a coupling seat designed to receive a respective coupling portion of the pin 9 forming a shape coupling. Moreover, in accordance with this embodiment, the pin 9 may have an end portion designed to engage in a respective housing of the supporting base 2 for making a rotatable coupling without altering the inventive concept of the invention.

Moreover, the lock 1 comprises uncoupling means 12 acting on the mechanical transmission 8 for disengaging kinematically, and in a controlled way, the movable element 4 from the operating element 7 so as to disable an actuation of the operating element 7 by the movable element 4.

In other words, the uncoupling means 12 are configured to uncouple the movement of the control element 3 and/or the movable element 4 from that of the operating element 7.

More specifically, the uncoupling means 12 act in such a way as to move axially between each other the control element 3 and/or the operating element 7, preferably by moving away from each other, in such a way as to disengage the grooved connection and/or the kinematic coupling defined by the fork-shaped portion 5 and by the coupling pin 6.

Preferably, the uncoupling means 12 comprise a uncoupling element 13 interposed between the control element 3 and the operating element 7.

According to a possible embodiment and as illustrated in the accompanying drawings, the uncoupling means 12 can be connected or connectable to the further movable element "4a" to allow the actuation of the control element 3.

Moreover, the uncoupling means 12 may comprise an intermediate element 14 rotatable about the axis of rotation "Z", preferably fixed axially, and which can be operated in a controlled manner.

Advantageously, the uncoupling element 13 may be mounted on the intermediate element 14 by means of a grooved coupling in such a way that the uncoupling element 13 is rotationally integral with the intermediate element 14 and axially slidable relative to it.

In other words, the uncoupling element 13 is rotationally constrained to the intermediate element 14 and axially translatable relative to it.

According to a possible embodiment and as illustrated in the accompanying drawings, the uncoupling means 12 are fitted on the pin 9.

More specifically, the pin 9 has a first portion "9a" having a cylindrical shape configured for supporting the above-mentioned uncoupling means 12 and a second portion "9b" having a quadrangular shape designed to define the grooved connection with the control element 3.

As described above, the uncoupling element 13 can be rotated about the axis of rotation "Z" in a controlled manner for uncoupling rotationally with each other the control element 3 and the operating element 7.

Preferably, the uncoupling element 13 can be axially translated, under the action of cam means 15, to receive a movement along the axis "Z" following a rotation of the uncoupling means 12 about the axis of rotation "Z" and perform the axial movement of the control element 3.

More specifically, the cam means 15 may comprise a fixed ramp 16 which can be engaged by a portion of the uncoupling element 13 during the rotation about the axis of rotation "Z" to receive, following the above-mentioned rotation, an axial translation movement along the axis of rotation "Z".

More specifically, the uncoupling element 13 may have at least one radial protrusion "13a" which, intercepting the plane defined by the fixed ramp 16, causes a movement of the uncoupling element 13 along the axis of rotation "Z".

The uncoupling element 13 also has axial protrusions engaged in sliding against a thrust surface of the control element 3 in such a way as to allow a reciprocal rotation between the uncoupling element 13 and the control element 3 in a mutual axial contact configuration, in particular during the axial movement of the control element 3 actuated by the uncoupling element 13.

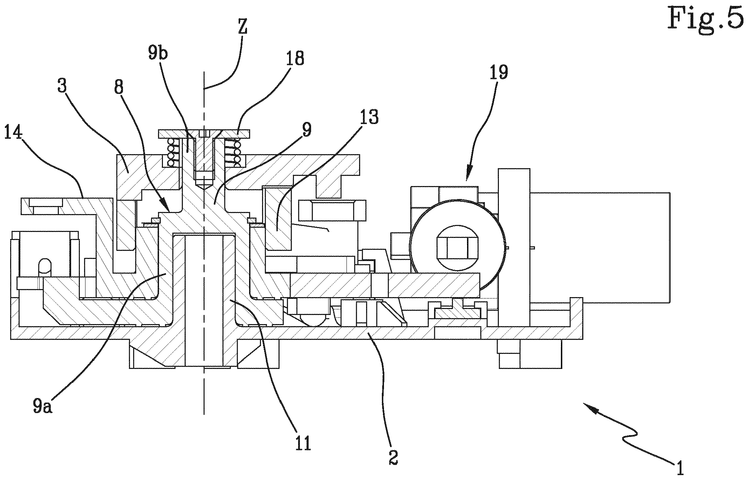

In this way, the control element 3 can translate, for example until disengaging the coupling pin 6 from the fork-shaped portion 5 of the movable element 4, performing a kinematic uncoupling between the control element 3 and the operating element 7 (as illustrated in Figure 5).

According to a possible embodiment and as illustrated in the accompanying drawings, the control element 3 has at least one contact element "3a" configured for making contact with a respective element 17 of the supporting base 2 in such a way as to prevent a translation of the control element 3 along the axis of rotation "Z" during an open condition of the panel.

More specifically, the uncoupling element 13 may comprise at least one tooth "13b" designed to slide in rotation in a suitable rotation seat "3b" of the control element 3 in such a way as to uncouple the rotation of the uncoupling element 13 from the movement of the control element 3.

Moreover, the lock 1 may comprise a fixed contact element 18 axially spaced from the control element 3 designed to define an axial limit stop for the control element 3.

More specifically, the lock 1 may comprise opposing elastic means, preferably a spring, designed to oppose an axial movement of the uncoupling means 12, preferably of the uncoupling element 13.

Preferably, the uncoupling element 13 can be rotated about the axis of rotation "Z" by means of a mechanical actuator and/or a pneumatic actuator and/or by means of a manual action, for example by moving a lever or a key.

According to a possible embodiment and as illustrated in the accompanying drawings, the lock 1 comprises a mechanical actuator 19 and a movement lever 20 which can be operated by a key.

The mechanical actuator 19 and the movement lever 20 are configured for actuating the uncoupling element 13 in such a way as to rotationally uncouple the control element 3 from the operating element 7.

Preferably, the above-mentioned actuators are configured for actuating the uncoupling element 13 in a closed condition of the panel.

Advantageously, the operating element 7 and/or the mechanical transmission 8 and/or the control element 3 are made at least partly, preferably entirely, of plastic material.

According to a possible embodiment, the operating element 7, the mechanical transmission 8 and the control element 3 are made of plastic material in such a way as to limit the occurrence of relative forces between the components due to any thermal expansions and/or contractions.

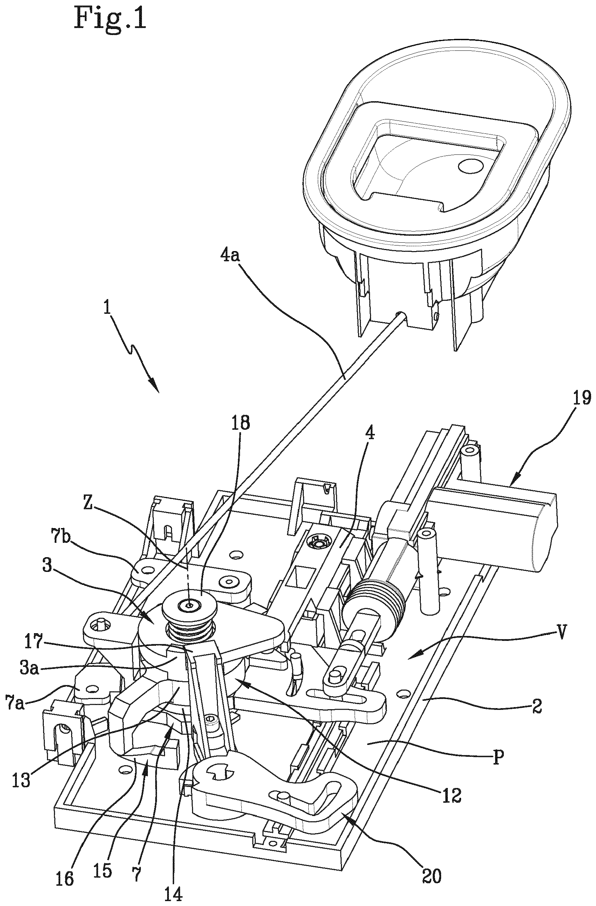

In use and in accordance with the specific configuration illustrated in Figure 1, during an operation for opening from the outside the user acts on the control handle causing the movement of the movable element 4 and therefore a clockwise rotation of the control element 3.

The control element 3 rotates the first operating body "7a" which, in turn, moves the second operating body "7b". The movement of the first operating body "7a" and of the second operating body "7b" actuates the release means causing the release of the closing panel.

During an opening operation from the inside the user acts on the further control handle, for example pulling it, causing the movement of the further movable element "4a" and of the control element 3 in a clockwise direction. The control element 3 rotates the first operating body "7a" which, in turn, moves the second operating body "7b". The movement of the first operating body "7a" and of the second operating body "7b" actuates the release means causing the release of the closing panel.

Moreover, with regard to the activation of the uncoupling means 12, the user can actuate the mechanical actuator 19, for example by means of a remote control, or act on the movement lever 20, for example which can be activated by means of a key, determining, respectively, an anticlockwise rotation of the uncoupling means which, thanks to the presence of the fixed ramps 16, determine a translation of the control element 3 along the axis of rotation "Z" uncoupling it from the movable element 3 or, in an embodiment not illustrated, from the operating element 7. In this situation, each opening attempt by means of the movable element 4 (through the control handle) is ineffective because the control element 3 is disengaged from the movable element 4 (coupling pin 6 disengaged from the respective fork-shaped portion 5).

The user can also actuate the uncoupling means 12 acting on the further control handle, for example by pressing it, in such a way as to determine an anticlockwise movement of the uncoupling means 12.

In accordance with a further inventive aspect, this invention relates to a closing device 100 comprising a movable panel 101, in particular a closing sash, door or window.

The closing device 100 comprises at least one lock 1, mounted on the movable panel 101, and one or more locking rods connected or connectable to the operating element and able to be moved axially between a closed condition in which they define a locking of the panel and an open condition in which they allow movement of the panel.

Moreover, the device comprises a control handle 102 mounted on the panel and connected to the movable element 4 for promoting an opening and/or a closing of the movable panel 101.

Advantageously, the closing device 100 may also comprise a further control handle connected to the further movable element "4a" to allow a different type of locking and/or releasing of the panel.

It should be noted, therefore, that the invention achieves the preset aims by providing a particularly efficient lock and having an increased duration of the operating life relative to the prior art devices thanks to the presence of uncoupling means acting on the mechanical transmission for uncoupling rotationally, and in a controlled manner, the control element and/or the movable element from the operating element.

Advantageously, this kinematic uncoupling makes it possible to limit the mechanical wear due to the relative movement of the components, for example induced by vibration loads to which the lock may be subjected during the movement of the caravan.

Moreover, the use of plastic material for the components allows the occurrence of forces due to the thermal variations to be limited determining an increase in the operating life of the lock.

## Claims

1. A lock (1) comprising:
- a supporting base (2);
- a movable element (4) connected or connectable to a control handle which can be operated by a user; wherein said movable element (4) is movable, preferably by sliding or translation, between a first position corresponding to an open condition of said handle and a second position corresponding to a closed condition of said handle;
- an operating element (7) mounted on the supporting base (2) in a rotatable fashion about an axis of rotation (Z) and connected or connectable to means for releasing a closing panel, in particular a sash, a window or a door, said operating element (7) being rotatable between a first position corresponding to an open condition of the panel and a second position corresponding to a closed condition of the panel;
- a mechanical transmission (8) acting between said movable element (4) and said operating element (7) and designed to connect kinematically between them said movable element (4) and operating element (7) in such a way that a movement of said movable element (4) causes a rotation of said operating element (7) about said axis of rotation (Z);
- uncoupling means (12) acting on the mechanical transmission (8) for disengaging kinematically, and in a controlled way, said movable element (4) from said operating element (7) so as to disable an actuation of said operating element (7) by the movable element (4);
wherein said mechanical transmission (8) comprises a pin (9) mounted on said supporting base (2) in a rotatable fashion around said axis of rotation (Z) and a control element (3) mounted on the pin (9) in a rotatable fashion around said axis of rotation (Z) and connectable to said movable element (4), preferably in an eccentric fashion with respect to the axis (Z), in such a way that a movement of the movable element (4) causes a rotation of the control element (3) about said axis (Z), said pin (9) being rotatably coupled with said control element (3) and operating element (7) for transmitting a mechanical torque about said axis of rotation (Z); wherein the coupling between said pin (9) and at least one of said control element (3) and operating element (7) is formed by means of a grooved connection along said axis of rotation (Z); and wherein said uncoupling means (12) act in such a way as to axially move the control element (3) in such a way as to disengage the control element (3) from the grooved connection and/or from the movable element (4).

2. The lock according to claim 1, wherein said pin (9) is connected to said control element (3) by means of said grooved connection; and wherein said pin (9) is rotationally integral in a permanent fashion with said operating element (7), preferably said pin (9) being made integrally with said operating element (7); preferably also said control element (3) being permanently connected in a rotational fashion, in a relative axial sliding movement, with the pin (9) by means of said grooved connection.

3. The lock according to any one of the preceding claims, wherein said uncoupling means (12) comprise an uncoupling element (13) interposed between the control element (3) and said operating element (7), said uncoupling element (13) being rotatable about said axis of rotation (Z); wherein the uncoupling element (13) is axially translatable, under the action of cam means (15), for receiving a movement along said axis (Z) following a rotation of the uncoupling means (12) about said axis (Z) and forming said axial movement of the control element (3); and wherein the uncoupling element (13) can rotated about said axis of rotation (Z) in a controlled way for uncoupling from each other said movable element (4) and operating element (7).

4. The lock according to claim 3, wherein the uncoupling element can be rotated about said axis of rotation (Z) by means of a mechanical actuator (19) and/or a pneumatic actuator and/or by a manual action, for example by a movement of a movement lever (20) or of a key.

5. The lock according to claim 3 or 4, wherein said cam means (15) comprise a fixed ramp (16) engageable by a portion of said uncoupling means (12) during the rotation about said axis of rotation (Z) for receiving, following the rotation about said axis of rotation (Z), an axial translation movement along said axis of rotation (Z).

6. The lock according to any one of claims 3 to 5, wherein said uncoupling element (13) has axial protrusions engaged in a sliding fashion against a pushing surface of the control element (3) in such a way as to allow a reciprocal rotation between the uncoupling element (13) and the control element (3) in a configuration of mutual axial contact, in particular during the axial movement of the control element (3) actuated by the uncoupling element (13); and wherein said control element (3) has at least one contact element (3a) configured to make contact with a respective locking element (17) of said supporting base (2), said contact element (3a) being designed to prevent a translation of said control element (3) along said axis of rotation (Z) during an open condition of the panel.

7. The lock according to any one of claims 3 to 6, wherein said uncoupling means (12) comprise an intermediate element (14), which is able to rotate about said axis of rotation (Z) and able to be operated in a controlled manner, said uncoupling element (13) being mounted on said intermediate element (14) by means of a grooved coupling along the axis (Z) in such a way that said uncoupling element (13) is rotationally integral with the intermediate element (14) and axially slidable relative to it; preferably, the intermediate element (14) being axially fixed.

8. The lock according to any one of the preceding claims, wherein the movable element (4) is defined by a rod or slider provided with translational movement and coupled to the control element (3) in an eccentric portion with respect to said axis (Z) by means of a coupling pin (6) which can be moved by a fork-shaped portion (5) of the movable element (4).

9. The lock according to any one of the preceding claims, comprising elastic opposing means, preferably a spring, designed to oppose an axial movement of said uncoupling means (12), preferably of said uncoupling element (13).

10. The lock according to any one of the preceding claims, comprising a fixed contact element which is axially spaced from said control element (3), said fixed contact element (18) defining an axial end of stroke position for said control element (3).

11. The lock according to any one of the preceding claims, wherein said supporting base (2) and/or said operating element (7) and/or said transmission (8) and/or said control element (3) are made at least partly, preferably entirely, of plastic material.

12. The lock according to any one of the preceding claims, wherein said supporting base (2) has a main plane (P) on which it lies and wherein said axis of rotation (Z) is transversal, preferably perpendicular, to said main plane (P).

13. A closing device (100) comprising:
- a movable panel (101), in particular a closing sash, door or window;
- at least one lock according to any one of the preceding claims and mounted on said movable panel;
- one or more locking rods connected or connectable to said operating element and able to be moved axially between a closed condition in which they define a locking of the panel and an open condition in which they allow movement of the panel;
- a control handle (102) mounted on the panel and connected to said movable element (4) to promote an opening and/or closing of said panel.

## Patentansprüche

1. Schloss (1), umfassend:
- eine Halterungsbasis (2);
- ein bewegbares Element (4), das mit einem Bediengriff verbunden oder verbindbar ist, der von einem Nutzer bedient werden kann, wobei das bewegbare Element (4) vorzugsweise durch Verschiebung oder Translation zwischen einer ersten Position, die einem offenen Zustand des Griffs entspricht, und einer zweiten Position, die einem geschlossenen Zustand des Griffs entspricht, bewegbar ist;
- ein Bedienelement (7), das auf der Halterungsbasis (2) auf drehbare Weise um eine Rotationsachse (Z) montiert und mit Mitteln zur Freigabe eines Verschlusspaneels, insbesondere eines Flügelrahmens, eines Fensters oder einer Tür, verbunden oder verbindbar ist, wobei das Bedienelement (7) zwischen einer ersten Position, die einem offenen Zustand des Paneels entspricht, und einer zweiten Position, die einem geschlossenen Zustand des Paneels entspricht, drehbar ist;
- einen mechanischen Antrieb (8), der zwischen dem bewegbaren Element (4) und dem Bedienelement (7) wirkt und ausgestaltet ist, um eine kinematische Verbindung zwischen dem bewegbaren Element (4) und dem Bedienelement (7) herzustellen, sodass eine Bewegung des bewegbaren Elements (4) eine Drehung des Bedienelements (7) um die Rotationsachse (Z) bewirkt;
- Entkupplungsmittel (12), die auf den mechanischen Antrieb (8) wirken, um das bewegbare Element (4) kinematisch und auf kontrollierte Weise vom Bedienelement (7) zu lösen, sodass eine Betätigung des Bedienelements (7) durch das bewegbare Element (4) deaktiviert wird,
wobei der mechanische Antrieb (8) einen Zapfen (9) umfasst, der auf der Halterungsbasis (2) auf drehbare Weise rund um die Rotationsachse (Z) montiert ist, und ein Steuerelement (3), das auf dem Zapfen (9) auf eine drehbare Weise rund um die Rotationsachse (Z) montiert und mit dem bewegbaren Element (4) verbindbar ist, vorzugsweise auf eine exzentrische Weise zur Achse (Z), sodass eine Bewegung des bewegbaren Elements (4) eine Drehung des Steuerelements (3) um die Achse (Z) bewirkt,
wobei der Zapfen (9) drehbar mit dem Steuerelement (3) und dem Bedienelement (7) gekuppelt ist, um ein mechanisches Drehmoment um die Rotationsachse (Z) zu übertragen, wobei die Kupplung zwischen dem Zapfen (9) und mindestens entweder dem Steuerelement (3) und/oder dem Bedienelement (7) mittels einer genuteten Verbindung entlang der Rotationsachse (Z) geformt ist, und wobei die Entkupplungsmittel (12) so wirken, dass das Steuerelement (3) axial bewegt wird, sodass das Steuerelement (3) von der genuteten Verbindung und/oder vom bewegbaren Element (4) gelöst wird.

2. Schloss nach Anspruch 1, wobei der Zapfen (9) mit dem Steuerelement (3) mittels der genuteten Verbindung verbunden ist, und wobei der Zapfen (9) rotatorisch fest auf permanente Weise mit dem Bedienelement (7) verbunden ist, wobei der Zapfen (9) vorzugsweise in einem Stück mit dem Bedienelement (7) ausgebildet ist, wobei auch das Steuerelement (3) vorzugsweise permanent auf rotatorische Weise in einer relativen axialen Verschiebebewegung mittels der genuteten Verbindung mit dem Zapfen (9) verbunden ist.

3. Schloss nach einem der vorhergehenden Ansprüche, wobei die Entkupplungsmittel (12) ein Entkupplungselement (13) umfassen, das zwischen dem Steuerelement (3) und dem Bedienelement (7) eingesetzt ist, wobei das Entkupplungselement (13) um die Rotationsachse (Z) drehbar ist, wobei das Entkupplungselement (13) axial unter der Wirkung von Nockenmitteln (15) verschiebbar ist, um eine Bewegung entlang der Achse (Z) folgend einer Drehung der Entkupplungsmittel (12) und die Achse (Z) zu empfangen und formend die axiale Bewegung des Steuerelements (3), und wobei das Entkupplungselement (13) um die Rotationsachse (Z) auf kontrollierte Weise gedreht werden kann, um das bewegbare Element (4) und das Bedienelement (7) voneinander zu entkuppeln.

4. Schloss nach Anspruch 3, wobei das Entkupplungselement um die Rotationsachse (Z) mittels eines mechanischen Stellglieds (19) und/oder eines pneumatischen Stellglieds und/oder einer manuellen Handlung beispielsweis durch eine Bewegung eines Bewegungshebels (20) oder eines Schlüssels gedreht werden kann.

5. Schloss nach Anspruch 3 oder 4, wobei die Nockenmittel (15) eine fixe Rampe (16) umfassen, in die ein Abschnitt der Entkupplungsmittel (12) während der Drehung um die Rotationsachse (Z) in Eingriff gelangen kann, um folgend der Drehung um die Rotationsachse (Z) eine axiale Verschiebungsbewegung entlang der Rotationsachse (Z) zu erhalten.

6. Schloss nach einem der Ansprüche 3 bis 5, wobei das Entkupplungselement (13) axiale Vorsprünge aufweist, die auf verschiebbare Weise gegen eine schiebende Oberfläche des Steuerelements (3) im Eingriff sind, sodass eine gegenseitige Drehung zwischen dem Entkupplungselement (13) und dem Steuerelement (3) in einer Auslegung des gegenseitigen axialen Kontakts erlaubt wird, insbesondere während der axialen Bewegung des Steuerelements (3), das vom Entkupplungselement (13) betätigt wird, und wobei das Steuerelement (3) mindestens ein Kontaktelement (3a) aufweist, das ausgelegt ist, um den Kontakt mit einem jeweiligen Verriegelungselement (17) der Halterungsbasis (2) herzustellen, wobei das Kontaktelement (3a) ausgestaltet ist, um eine Translation des Steuerelements (3) entlang der Rotationsachse (Z) während eines Öffnungszustands des Paneels zu vermeiden.

7. Schloss nach einem der Ansprüche 3 bis 6, wobei die Entkupplungsmittel (12) ein Zwischenelement (14) umfassen, das in der Lage ist, sich um die Rotationsachse (Z) zu drehen und das in der Lage ist, auf kontrollierte Weise bedient zu werden, wobei das Entkupplungselement (13) auf dem Zwischenelement (14) mittels einer genuteten Kupplung entlang der Achse (Z) so montiert ist, dass das Entkupplungselement (13) rotatorisch fest mit dem Zwischenelement (14) verbunden und axial dazu verschiebbar ist, wobei das Zwischenelement (14) vorzugsweise axial fixiert ist.

8. Schloss nach einem der vorhergehenden Ansprüche, wobei das bewegbare Element (4) durch eine Stange oder einen Schieber definiert ist, ausgestattet mit einer translatorischen Bewegung und gekuppelt mit dem Steuerelement (3) in einem exzentrischen Abschnitt zur Achse (Z) mittels eines Kupplungszapfens (6), der durch einen gabelförmigen Abschnitt (5) des bewegbaren Elements (4) bewegt werden kann.

9. Schloss nach einem der vorhergehenden Ansprüche, umfassend elastische entgegenwirkende Mittel, vorzugsweise eine Feder, die ausgestaltet sind, um einer axialen Bewegung der Entkupplungsmittel (12), vorzugsweise des Entkupplungselements (13), entgegenzuwirken.

10. Schloss nach einem der vorhergehenden Ansprüche, umfassend ein fixes Kontaktelement, das axial vom Steuerelement (3) beabstandet ist, wobei das fixe Kontaktelement (18) eine axiale Hubendeposition für das Steuerelement (3) definiert.

11. Schloss nach einem der vorhergehenden Ansprüche, wobei die Halterungsbasis (2) und/oder das Betriebselement (7) und/oder der Antrieb (8) und/oder das Steuerelement (3) zumindest teilweise und vorzugsweise vollständig aus Kunststoff gefertigt sind.

12. Schloss nach einem der vorhergehenden Ansprüche, wobei die Halterungsbasis (2) eine Hauptebene (P) aufweist, auf der sie liegt, und wobei die Rotationsachse (Z) quer, vorzugsweise senkrecht zur Hauptebene (P) angeordnet ist.

13. Verschlussvorrichtung (100), umfassend:
- ein bewegbares Paneel (101), insbesondere einen schließenden Flügel, eine Tür oder ein Fenster;
- mindestens ein Schloss nach einem der vorhergehenden Ansprüche, montiert auf dem bewegbaren Paneel;
- eine oder mehrere Verriegelungsstangen, die mit dem Betriebselement verbunden oder verbindbar und in der Lage, sich axial zwischen einer geschlossenen Position, in der sie eine Verriegelung des Paneels definieren, und einer offenen Position, in der sie die Bewegung des Paneels ermöglichen, zu bewegen;
- einen Bediengriff (102), der auf dem Paneel montiert und mit dem bewegbaren Element (4) verbunden ist, um ein Öffnen und/oder Schließen des Paneels zu veranlassen.

## Revendications

1. Verrou (1), comprenant :
- une base de support (2) ;
- un élément mobile (4) connecté ou connectable à une poignée de commande qui peut être actionnée par un utilisateur ; dans lequel ledit élément mobile (4) est mobile, de préférence par glissement ou translation, entre une première position correspondant à un état ouvert de ladite poignée et une seconde position correspondant à un état fermé de ladite poignée ;
- un élément d'actionnement (7) monté sur la base de support (2) de manière à pouvoir tourner autour d'un axe de rotation (Z) et connecté ou connectable à des moyens pour libérer un panneau de fermeture, en particulier un châssis, une fenêtre ou une porte, ledit élément d'actionnement (7) pouvant tourner entre une première position correspondant à un état ouvert du panneau et une seconde position correspondant à un état fermé du panneau ;
- une transmission mécanique (8) agissant entre ledit élément mobile (4) et ledit élément d'actionnement (7) et conçue pour connecter cinématiquement entre eux ledit élément mobile (4) et l'élément d'actionnement (7) de telle manière qu'un mouvement dudit élément mobile (4) provoque une rotation dudit élément d'actionnement (7) autour dudit axe de rotation (Z) ;
- des moyens de désaccouplement (12) agissant sur la transmission mécanique (8) pour désengager cinématiquement, et d'une manière contrôlée, ledit élément mobile (4) dudit élément d'actionnement (7) de façon à désactiver un actionnement dudit élément d'actionnement (7) au moyen de l'élément mobile (4) ;
dans lequel ladite transmission mécanique (8) comprend une broche (9) montée sur ladite base de support (2) de manière à pouvoir tourner autour dudit axe de rotation (Z) et un élément de commande (3) monté sur la broche (9) de manière à pouvoir tourner autour dudit axe de rotation (Z) et connectable audit élément mobile (4), de préférence de manière excentrique par rapport à l'axe (Z), de telle sorte qu'un mouvement de l'élément mobile (4) provoque une rotation de l'élément de commande (3) autour dudit axe (Z), ladite broche (9) étant accouplée de manière rotative avec ledit élément de commande (3) et l'élément d'actionnement (7) pour transmettre un couple mécanique autour dudit axe de rotation (Z) ; dans lequel l'accouplement entre ladite broche (9) et au moins l'un desdits élément de commande (3) et élément d'actionnement (7) est formé au moyen d'une connexion rainurée le long dudit axe de rotation (Z) ; et dans lequel lesdits moyens de désaccouplement (12) agissent de manière à déplacer axialement l'élément de commande (3) de manière à désengager l'élément de commande (3) de la connexion rainurée et/ou de l'élément mobile (4).

2. Verrou selon la revendication 1, dans lequel ladite broche (9) est connectée audit élément de commande (3) au moyen de ladite connexion rainurée ; et dans lequel ladite broche (9) est solidaire en rotation d'une manière permanente avec ledit élément d'actionnement (7), de préférence ladite broche (9) étant réalisée d'un seul tenant avec ledit élément d'actionnement (7) ; de préférence également ledit élément de commande (3) étant connecté de manière permanente d'une manière rotative, dans un mouvement de coulissement axial relatif, avec la broche (9) au moyen de ladite connexion rainurée.

3. Verrou selon l'une quelconque des revendications précédentes, dans lequel lesdits moyens de désaccouplement (12) comprennent un élément de désaccouplement (13) interposé entre l'élément de commande (3) et ledit élément d'actionnement (7), ledit élément de désaccouplement (13) pouvant tourner autour dudit axe de rotation (Z) ; dans lequel l'élément de désaccouplement (13) peut être translaté axialement, sous l'action de moyens de came (15), pour recevoir un mouvement le long dudit axe (Z) à la suite d'une rotation des moyens de désaccouplement (12) autour dudit axe (Z) et former ledit mouvement axial de l'élément de commande (3) ; et dans lequel l'élément de désaccouplement (13) peut tourner autour dudit axe de rotation (Z) d'une manière contrôlée pour désaccoupler l'un de l'autre ledit élément mobile (4) et l'élément d'actionnement (7) .

4. Verrou selon la revendication 3, dans lequel l'élément de désaccouplement peut être tourné autour dudit axe de rotation (Z) au moyen d'un actionneur mécanique (19) et/ou d'un actionneur pneumatique et/ou par une action manuelle, par exemple par un mouvement d'un levier de mouvement (20) ou d'une clé.

5. Verrou selon la revendication 3 ou 4, dans lequel lesdits moyens de came (15) comprennent une rampe fixe (16) pouvant être engagée par une partie desdits moyens de désaccouplement (12) pendant la rotation autour dudit axe de rotation (Z) pour recevoir, après la rotation autour dudit axe de rotation (Z), un mouvement de translation axiale le long dudit axe de rotation (Z).

6. Verrou selon l'une quelconque des revendications 3 à 5, dans lequel ledit élément de désaccouplement (13) a des saillies axiales engagées de manière coulissante contre une surface de poussée de l'élément de commande (3) de manière à permettre une rotation réciproque entre l'élément de désaccouplement (13) et l'élément de commande (3) dans une configuration de contact axial mutuel, en particulier pendant le mouvement axial de l'élément de commande (3) actionné par l'élément de désaccouplement (13) ; et dans lequel ledit élément de commande (3) a au moins un élément de contact (3a) configuré pour faire contact avec un élément de verrouillage respectif (17) de ladite base de support (2), ledit élément de contact (3a) étant conçu pour empêcher une translation dudit élément de commande (3) le long dudit axe de rotation (Z) pendant une condition ouverte du panneau.

7. Verrou selon l'une quelconque des revendications 3 à 6, dans lequel lesdits moyens de désaccouplement (12) comprennent un élément intermédiaire (14), pouvant tourner autour dudit axe de rotation (Z) et pouvant être actionné de manière contrôlée, ledit élément de désaccouplement (13) étant monté sur ledit élément intermédiaire (14) au moyen d'un accouplement rainuré le long de l'axe (Z) de telle sorte que ledit élément de désaccouplement (13) est solidaire en rotation de l'élément intermédiaire (14) et coulissant axialement par rapport à celui-ci ; de préférence, l'élément intermédiaire (14) étant fixé axialement.

8. Verrou selon l'une quelconque des revendications précédentes, dans lequel l'élément mobile (4) est défini par une tige ou un coulisseau doté d'un mouvement de translation et accouplé à l'élément de commande (3) dans une partie excentrée par rapport audit axe (Z) au moyen d'une broche d'accouplement (6) qui peut être déplacée par une partie en forme de fourche (5) de l'élément mobile (4).

9. Verrou selon l'une quelconque des revendications précédentes, comprenant des moyens d'opposition élastiques, de préférence un ressort, destinés à s'opposer à un déplacement axial desdits moyens de désaccouplement (12), de préférence dudit élément de désaccouplement (13).

10. Verrou selon l'une quelconque des revendications précédentes, comprenant un élément de contact fixe qui est axialement espacé dudit élément de commande (3), ledit élément de contact fixe (18) définissant une position axiale de fin de course pour ledit élément de commande (3).

11. Verrou selon l'une quelconque des revendications précédentes, dans lequel ladite base de support (2) et/ou ledit élément d'actionnement (7) et/ou ladite transmission (8) et/ou ledit élément de commande (3) sont réalisés au moins partiellement, de préférence entièrement, en matière plastique.

12. Verrou selon l'une quelconque des revendications précédentes, dans lequel ladite base de support (2) présente un plan principal (P) sur lequel il repose et dans lequel ledit axe de rotation (Z) est transversal, de préférence perpendiculaire, audit plan principal (P).

13. Dispositif de fermeture (100), comprenant :
- un panneau mobile (101), en particulier un ouvrant, une porte ou une fenêtre qui se ferment ;
- au moins un verrou selon l'une quelconque des revendications précédentes et monté sur ledit panneau mobile ;
- une ou plusieurs tiges de verrouillage connectées ou connectables audit élément d'actionnement et pouvant être déplacées axialement entre une condition fermée dans laquelle elles définissent un verrouillage du panneau et une condition ouverte dans laquelle elles permettent le mouvement du panneau ;
- une poignée de commande (102) montée sur le panneau et connectée audit élément mobile (4) pour favoriser une ouverture et/ou une fermeture dudit panneau.
